# EUROPÄISCHE PATENTANMELDUNG

(11) **EP 1 241 912 A2**
(43) Veröffentlichungstag der Anmeldung: **18.09.2002**
(21) Anmeldenummer: 01130811.1
(22) Anmeldetag: 24.12.2001
(51) Int. Cl.: H04Q 9/00, G08C 17/02

(54) **Funksystem zur Verbrauchsdatenerfassung**

(30) Priorität: 12.03.2001 DE 10112174; 12.05.2001 DE 10123251
(71) Anmelder: Techem Service Aktiengesellschaft & Co. KG, 60528 Frankfurt (DE)
(72) Erfinder: Hansing, Martin, Dipl.-Inf., 65931 Frankfurt am Main (DE); Matussek, Dirk, 60318 Frankfurt am Main (DE)
(74) Vertreter: KEIL & SCHAAFHAUSEN Patentanwälte

(57) **Zusammenfassung**

Funksystem zur Verbrauchsdatenerfassung aus einem Funknetzwerk mit Endgeräten und Datensammlern (2), wobei ein Endgerät jeweils eine Einrichtung zur Erfassung von Verbrauchswerten (V) und einen Funksender zur Aussendung von Funktelegrammen (1) mit den dem Endgerät zuordenbaren Verbrauchswerten (V) und ein Datensammler (2) jeweils einen Funkempfänger zum Empfang der Funktelegramme (1), ein Rechenwerk mit Speicher (4, 7) zum Überprüfen und Speichern der Funktelegramme (1, 6) und/oder der zugehörigen Verbrauchswerte (V) und einen Funksender zum Aussenden von Funktelegrammen (6) aufweist. Um ein kostengünstiges Funksystem zur Verbrauchsdatenerfassung mit erhöhter Funkreichweite zu schaffen, arbeiten die Funksender der Endgeräte und der Datensammler (2) in dem gleichen Frequenzbereich, wobei die Datensammler (2) die empfangenen Funktelegramme (1) wieder aussenden und das Aussenden der Funktelegramme (6) mittels einer Funktelegrammverwaltung (3) im Datensammler (2) kontrolliert wird.

## Beschreibung

Die Erfindung betrifft ein Funksystem zur Verbrauchsdatenerfassung, insbesondere in Gebäuden, aus einem Funknetzwerk mit Endgeräten und Datensammlern, wobei ein Endgerät jeweils eine Einrichtung zur Erfassung von Verbrauchswerten und einen Funksender zur Aussendung von Funktelegrammen mit den dem Endgerät zuordenbaren Verbrauchswerten aufweist und ein Datensammler jeweils einen Funkempfänger zum Empfang der Funktelegramme, ein Rechenwerk mit Speicher zum Überprüfen und Speichern der Funktelegramme und/oder der zugehörigen Verbrauchswerte und einen Funksender zum Aussenden von Funktelegrammen aufweist.

Es sind verschiedene Konzepte von drahtlosen Verbrauchsdatenerfassungssystemen für die Erfassung von Heizkosten, Wärme-, Wasser-, Strom oder Gasverbrauch bekannt. Die Systeme arbeiten in der Regel auf den freigegebenen ISM-Frequenzbändern (in Europa 434 MHz und 868 MHz). Weit verbreitet ist ein System mit einer größeren Anzahl fest installierter Datensammler mit Empfangsteil im Gebäude. Die Datensammler werden so angeordnet, dass sie für einen Ableser frei zugänglich sind, vorzugsweise in Treppenhäusern und -aufgängen oder in Hausfluren. Die Anzahl der benötigten Datensammler ergibt sich aus der Reichweite der Sender der Verbrauchsdatenerfassungsgeräte und der gewünschten Redundanz. Zur Erstellung einer Abrechnung sind regelmäßig alle Datensammler eines Gebäudes auszulesen. Derartige unidirektionale Funksysteme zur Verbrauchsdatenerfassung in Gebäuden, deren Datensammler nur einen Empfangsteil aufweisen und keine Möglichkeit zur Weiterleitung empfangener Verbrauchsdaten besitzen, haben den entscheidenden Nachteil, dass sie nur die Daten der in Funkreichweite liegenden Sender der Verbrauchsdatenerfassungsgeräte empfangen und speichern können. Fällt ein (möglicherweise batteriebetriebener) Datensammler aus, sind seine gesammelten Abrechnungsdaten verloren. Eine Abrechnung ist dann ohne Zeitverzug in der Regel nicht mehr möglich. Daher wurden in derartigen Funksystemen durch eine erhöhte Anzahl von Datensammlern Redundanzen geschaffen, durch die jedoch der Ausstattungsfaktor des Systems verschlechtert wird, da mindestens zwei Datensammler in der Reichweite eines Verbrauchsdatenerfassungsgerätes liegen müssen. Dies erhöht die Kosten bei der Anschaffung und Installation des Systems und bei der Ablesung der vergrößerten Anzahl von Datensammlern. Ferner bedeutet die Berücksichtigung der Redundanzen im Funksystem bei der Erstellung der Abrechnung zusätzlichen Aufwand.

Es sind auch hierarchisch gegliederte Funksysteme bekannt, bei denen die erfassten Verbrauchswerte über einen oder mehrere Zwischenempfänger/-sender zu einer Zentrale übertragen werden. Bei einem derartigen System gehen zwar bei Ausfall eines Datensammlers keine Ablesewerte verloren, der Aufwand für die Konzeption und Einrichtung eines derartigen hierarchischen Funknetzes ist jedoch hoch. Zum einen müssen die Zwischenempfänger/-sender je nach Hierarchieebene unterschiedliche Aufgaben erfüllen, so dass jeweils unterschiedliche bzw. entsprechend modifizierte Geräte notwendig sind. Zum anderen ist eine Redundanz der verschiedenen Kommunikationswege möglichst in jeder Hierarchieebene zu erreichen. Daher sind auch die Kosten für ein hierarchisches Funknetz hoch.

Aufgabe der vorliegenden Erfindung ist es, ein kostengünstiges Funksystem zur Verbrauchsdatenerfassung der Eingangs genannten Art zu schaffen, das eine erhöhte Funkreichweite aufweist, einfach erweiterbar ist und eine Ablesung der Verbrauchsdaten bei einem einzigen, beliebigen Datensammler ermöglicht.

Diese Aufgabe wird im Wesentlichen dadurch gelöst, dass die Funksender der Endgeräte und der Datensammler in dem gleichen Frequenzbereich arbeiten und dass die Datensammler die empfangenen Funktelegramme wieder aussenden, wobei das Aussenden der empfangenen Funktelegramme mittels einer Funktelegrammverwaltung im Datensammler kontrolliert wird. Damit wird ein einfaches Flutnetzwerk geschaffen, so dass ein Datensammler nicht nur die in Funkreichweite liegenden Verbrauchserfassungsgeräte empfangen kann, sondern auch Sendungen von benachbarten Datensammlern. Durch dieses Weiterleiten (Fluten) der Funktelegramme an weitere Datensammler, die die Funktelegramme ihrerseits weiterleiten, verteilen sich die Verbrauchsdaten jedes Endgerätes auf alle Datensammler, so dass eine Ablesung der Verbrauchsdaten an einem beliebigen Datensammler erfolgen kann. Zur Vermeidung oder Einschränkung von Mehrfachsendungen eines Funktelegramms durch denselben Datensammler wird das Aussenden der Funktelegramme durch eine Funktelegrammverwaltung in dem Datensammler kontrolliert.

Dazu führt die Funktelegrammverwaltung vorzugsweise eine Sperrliste der Endgeräte, von denen durch den Datensammler bereits ein Funktelegramm empfangen und wieder ausgesendet wurde. Ein Funktelegramm wird von dem Datensammler nur dann wieder ausgesendet, wenn das zugeordnete Endgerät nicht in der Sperrliste geführt wird. So wird zur Einsparung von Energie in dem Datensammler und zur Reduzierung der Funkbelastung in dem Funksystem sichergestellt, dass von diesem Datensammler bereits direkt oder indirekt empfangene und geflutete Funktelegramme nicht noch einmal ausgesendet werden.

Um das Weiterleiten von Funktelegrammen eines Endgerätes nur für einen bestimmten Zeitraum zu sperren, überprüft die Funktelegrammverwaltung bei Empfang eines Funktelegramms, ob das dem Funktelegramm zugeordnete Endgerät bereits in der Sperrliste geführt wird, trägt es andernfalls zusammen mit einer Sperrfrist in die Sperrliste ein und löscht es nach Ablauf der Sperrfrist wieder aus dieser Sperrliste. Dadurch wird erreicht, dass nur bereits empfangene, identische Funktelegramme nicht weiter geflutet werden, ein nach Ablauf der Sperrfrist gesendetes neues Funktelegramm mit neuen Verbrauchswerten des entsprechenden Endgerätes jedoch wieder berücksichtigt wird.

Besonders einfach ist die Verwaltung der Sperrliste, wenn sie chronologisch nach Anfangszeiten organisiert ist. Dafür eignet sich ein First-In-First-Out-Speicher (FIFO) besonders gut. In kurzen regelmäßigen Abständen oder unmittelbar bevor eine Geräte-Identifikation in der Sperrliste überprüft wird, entfernt die Funktelegrammverwaltung eines Datensammlers die Geräte-Identifikation, deren Sperrfrist abgelaufen ist, aus der Sperrliste. Auf Grund der chronologischen Organisation werden nacheinander nur die ältesten Einträge überprüft, bis ein Eintrag gefunden wird, dessen Sperrfrist noch nicht abgelaufen ist.

Eine weitere Möglichkeit zur Kontrolle des Aussendens von Funktelegrammen liegt darin, im Funktelegramm selbst einen Zugriffszähler zu führen, der bei jedem Aussenden des Funktelegramms weitergezählt wird, wobei die Funktelegrammverwaltung den Zugriffszähler bei Empfang des Funktelegramms überprüft und das Funktelegramm nur wieder aussendet, wenn der Zugriffszähler einen vorgegebenen Schwellenwert nicht erreicht hat. Sollte in dem empfangenen Funktelegramm noch kein Zugriffszähler enthalten sein (d.h. das Funktelegramm wurde noch nicht geflutet), wird der Zugriffszähler durch die Funktelegrammverwaltung eingefügt. Besonders einfach ist ein bei dem Wert Null beginnender Zugriffszähler, der inkrementiert wird, bis er ein Maximum erreicht hat. In diesem Fall wird ein Funktelegramm nicht mehr geflutet und die enthaltenen Daten nötigenfalls in den Datenspeicher des Datensammlers übernommen. Durch den Zugriffszähler wird die Anzahl von Mehrfachsendungen eines Funktelegramms durch einen Datensammler wirkungsvoll begrenzt.

Um zu verhindern, dass Funktelegramme mehrfach von demselben Datensammler geflutet werden, kann der Zugriffszähler mit dem Führen der Sperrliste mit Sperrfrist kombiniert werden, wobei die Dauer der Sperrfrist in Abhängigkeit von dem Wert des Zugriffszählers bestimmt wird. Dabei ist beim ersten Fluten, wenn der Zugriffszähler seinen Startwert hat, die Sperrzeit maximal. Bei jeder weiteren Stufe, die das geflutete Funktelegramm auf seinem Weg durch das Flutnetzwerk nimmt, kann die Sperrzeit mit steigendem Zugriffszähler reduziert werden. Dadurch wird erreicht, dass das Funksystem schon früher wieder für neue Funktelegramme zur Verfügung steht. Ohne zugriffszählerabhängige Bestimmung der Sperrzeiten vergibt auch der letzte Datensammler in einer Reihe von Weitergabestufen die maximale Sperrzeit, da er nicht ermitteln kann, wie viele Flutstufen bereits durchlaufen wurden. Die Systemerholzeiten nach dem Fluten eines Funktelegramms wären in diesem Fall ungünstiger.

Zur Vermeidung einer großen Belastung des Funksystems durch unmittelbares Fluten eines Funktelegramms nach dem ersten Empfang wird einem auszusendenden Funktelegramm in jedem Datensammler ein vorzugsweise pseudozufällig bestimmter Sendezeitpunkt zugeordnet und das Funktelegramm bis zum Erreichen des Sendezeitpunkts in einem temporären Speicher zwischengespeichert, der eine Sendewarteschlange für zu flutende Funktelegramme bildet. Durch pseudozufällige Auswahl des Sendezeitpunkts werden auf Grund der Netzwerkstruktur systematisch auftretende Kollisionen vermieden.

Es ist ebenso denkbar, auszusendende Funktelegramme während einer Sendepause mit vorzugsweise pseudozufälliger Länge in einem temporären Speicher zwischenzuspeichern und nach Ablauf der Sendepause vorzugsweise als kontinuierliche Folge von Funktelegrammen zu senden. Dann muss nicht jedem Funktelegramm ein individueller Sendezeitpunkt zugeordnet werden und die Anzahl der unabhängigen Funktelegramme kann reduziert werden.

Ferner kann erfindungsgemäß vorgesehen werden, dass das Aussenden von Funktelegrammen nur innerhalb vorgesehener Zeitintervalle eines Duty-Cycle-Intervalls des Funksystems vorgenommen wird. Der Duty-Cycle ist das Verhältnis von Sender-An-Zeit zu Sender-Aus-Zeit innerhalb eines als Duty-Cycle-Intervall bezeichneten Zeitraums. Durch die Festlegung von entsprechenden Zeitintervallen für das Aussenden von Funktelegrammen kann somit jeder vorgegebene Duty-Cycle einfach realisiert werden.

Zur Bestimmung der Zeitintervalle kann ein Aussendungszähler vorgesehen werden, der bei jedem Senden von Funktelegrammen durch den Datensammler weiter gezählt wird. Dabei wird ausgenutzt, dass das Aussenden eines Funktelegramms eine im Wesentlichen konstante, bestimmbare Zeit beansprucht. Erreicht der Aussendungszähler einen für die Einhaltung des Duty-Cycles maximal zulässigen Wert, dann stellt der Datensammler das Fluten weiterer Funktelegramme ein. Nach Ablauf des Duty-Cycle-Intervalls wird der Aussendungszähler dann zurückgesetzt und es können in einem neuen Duty-Cycle-Intervall erneut Funktelegramme von dem Datensammler gesendet werden.

Zusätzlich kann nach jedem Senden eines Funktelegramms oder einer Funktelegrammfolge eine Sendepause eingelegt werden, die aus einem Mindest-Zeitabschnitt und ggf. einem variablen, vorzugsweise pseudozufällig bestimmten Zeitabschnitt aufgebaut ist. Damit können die Sendezeitpunkte für Funktelegramme bzw. Funktelegrammfolgen allein über variable Pausenzeiten definiert werden und es ist möglich, Forderungen nach einer minimalen ununterbrochenen Pausenzeit (Sender-Aus-Zeit) und einer maximalen ununterbrochenen Sender-An-Zeit zu erfüllen. Der zufällige Anteil kann kontinuierlich oder diskret in Form von Pausenzeitschlitzen gebildet werden. Der Datensammler empfängt während der Pausenzeit weiterhin Funktelegramme von Endgeräten oder anderen Datensammlern, sondert ggf. irrelevante Funktelegramme aus, fügt weiterzuleitende Funktelegramme konsekutiv in eine Sendewarteschlange in dem temporären Speicher ein und sendet alles en bloc am Ende der Sendepause aus. Danach bestimmt die Funktelegrammverwaltung im Datensammler erneut eine Sendepause zufälliger Länge.

Zur Sicherung der Verbrauchswerte wird ein in einem empfangenen Funktelegramm enthaltener Verbrauchswert in einem Datenspeicher des Datensammlers gespeichert, wenn noch kein aktueller Datensatz vorhanden ist. Die Aktualität des Verbrauchswerts bzw. Datensatzes ist vorzugsweise mittels eines Zeitstempels oder einer definierten, insbesondere matrixartigen Speicherstruktur ermittelbar, bei der der Speicherort als Funktion von Geräte-Identifikation und Zeitpunkt der Erfassung gegeben ist. Denkbar ist beispielsweise, dass ein Datensammler Verbrauchswerte von 500 Endgeräten für einen Zeitraum von 12 oder 18 Monaten speichern kann. Der Speicher würde in einem solchen Fall als zweidimensionales Feld mit 12 bzw. 18 mal 500 Elementen angelegt. Der Speicherort ergibt sich dann aus dem Monatsindex 1 bis 12 bzw. 18 und einem Geräteindex, der beispielsweise über eine Hash-Tabelle berechnet wird. Eine kalenderartige Speichermatrix eignet sich gut, wenn in regelmäßigen Abständen Funktelegramme empfangen und für eine feste maximale Anzahl von Endgeräten Daten verwaltet werden sollen. Sind solche Randbedingungen nicht bekannt, können eintreffende Datensätze zusammen mit einem Zeitstempel beliebig, bspw. als lineare Liste, im Speicher abgelegt werden. Je nach benötigter Diskretisierung haben Zeitstempel eine tag-, wochen-, monats- oder jahrgenaue Auflösung. Abhängig von der Anwendung sind auch andere Auflösungen denkbar. Ein Datensatz ist dann aktuell, wenn sein Zeitstempel mit dem fortlaufenden Systemzeitstempel übereinstimmt.

Zur Stromersparnis ist erfindungsgemäß vorgesehen, dass sich ein insbesondere batteriebetriebener Datensammler nur zu bestimmten Betriebsintervallen einschaltet, wobei die Einschaltzeiten für die Empfänger und/oder Sender mit den übrigen Datensammlern insbesondere mittels Synchronisations-Fluttelegrammen synchronisierbar sind. Batteriebetriebene Datensammler schalten ihren Empfänger nur in vergleichsweise großen zeitlichen Abständen ein, wobei alle Datensammler annähernd gleichzeitig ihren Empfänger und/oder Sender einschalten sollen, um ein effektives Fluten der Funktelegramme zu ermöglichen. Zur Bestimmung des Einschaltzeitpunkts besitzt jeder Datensammler einen Zeitgeber. Naturgemäß sind zeitbestimmende Bauelemente, wie bspw. Schwingquarze, mit Toleranzen behaftet. Die Zeitgeber der Datensammler können deshalb langfristig so große Zeitunterschiede akkumulieren, dass sich die Empfänger-An-Zeiten verschiedener Datensammler nur noch wenig oder gar nicht überdecken. Zur Synchronisation des Zeitgebers werden daher Synchronisations-Fluttelegramme verwendet, die im Zeitpunkt des Sendens den aktuellen Stand des Zeitgebers des Datensammlers und ein Merkmal seiner Herkunft enthalten. Dies kann wie bei den Endgeräten bspw. eine eindeutige und einmalige Geräte-Identifikation sein. Die Funktelegrammverwaltung jedes Datensammlers weist ein Entscheidungsverfahren auf, auf Grund dessen entschieden werden kann, welcher Zeitgeber der für das System bestimmende Zeitgeber ist, um den jeweils eigenen Zeitgeber an diesen anzupassen. Die Synchronisation erfolgt dabei in solchen Abständen, dass sich die Zeittoleranzen nicht über ein kritisches Maß hinaus akkumulieren können.

Vorzugsweise ist die Systemzugehörigkeit eines Endgeräts und/oder eines Datensammlers insbesondere mittels einer Geräte-Identifikationsliste und/oder eines übereinstimmenden Systemcodes feststellbar. Dazu werden bspw. jedem Datensammler bei der Inbetriebnahme eine Liste der Geräte-Identifikationen aller zum System gehörenden Verbrauchserfassungsgeräte (Endgeräte) und Datensammler eingespeist. Sobald alle Datensammler-ldentifikationen des Systems bekannt sind, können Endgeräte-Identifikationen bereits als Betriebsparameter bspw. über das Funksystem mittels spezieller Funktelegramme eingespeist werden. Das Einspeisen einer Identifikationsliste mit den Geräten eines Systems bzw. die Vergabe eines Systemcodes kann aber auch über eine Serviceschnittstelle oder manuell über vorhandene Bedienelemente erfolgen. Bei Vergabe eines einheitlichen Systemcodes ist darauf zu achten, dass verschiedene Systeme verschiedene Systemcodes erhaltenen. Der Systemcode muss zur Feststellung der Systemzugehörigkeit in den Funktelegrammen enthalten sein.

Ferner ist zur weiteren Vereinfachung des Funksystems vorgesehen, dass die Betriebsparameter eines Datensammlers mittels Service-Funktelegrammen und/oder durch Parametrisierung bei der Geräteherstellung variabel einstellbar sind. Dabei wird zwischen funktechnisch zulassungsrelevanten und nicht-zulassungsrelevanten Betriebsparametern unterschieden, wobei nicht-zulassungsrelevante Parameter bei der Inbetriebnahme oder während des laufenden Betriebs verändert werden können, um das Systemverhalten zu optimieren. Um die Möglichkeit von Funkkollisionen zwischen benachbarten Funksystemen zu minimieren, kann es möglicherweise vorteilhaft sein, bei verschiedenen Systemen unterschiedliche Betriebszeiten einzustellen. Über die reine Weitergabe von abrechnungsrelevanten Verbrauchsdaten hinaus soll das Funksystem auch Servicefälle wie Löschen, Austauschen oder Hinzufügen von Systemkomponenten und deren Parametrisierung unterstützen. Für die Servicefälle werden in einem ersten Schritt bspw. an einem beliebigen Datensammler die gewünschten Einstellungen vorgenommen und in einem zweiten Schritt das Fluten der Informationen initiiert. Sind fremdversorgte Datensammler mit Dauerempfang Bestandteil der Systems, können entsprechende Service-Fluttelegramme unmittelbar weiter gesendet werden. Handelt es sich um batteriebetriebene Datensammler, die ihren Empfänger nur zu festgelegten Betriebszeiten einschalten, werden die Service-Funktelegramme vorzugsweise zum nächstmöglichen, allen Datensammlern gemeinsamen Zeitpunkt weitergesendet. In diesem Fall kann eine Befehlswarteschlange in dem Speicher der Datensammler vorgesehen sein, um ausreichend viele Servicebefehle zwischenspeichern zu können.

Zur weiteren Optimierung des Funksystems kann vorgesehen werden, dass ein Datensammler seine Betriebsparameter mittels Service-Funktelegrammen durch Bestimmung seiner Funkumgebung automatisch anpasst. So können die Datensammler bspw. bei einer gestörten Funkumgebung selbständig ausweichen.

Nachfolgend wird ein erfindungsgemäßes Funksystem unter Bezugnahme auf die Zeichnung näher beschrieben. Die dabei angegebenen Betriebsparameter beziehen sich auf eine typische Anwendung zur Verbrauchsdatenerfassung innerhalb eines Gebäudes. Das erfindungsgemäße Funksystem kann jedoch auch mit anderen Betriebsparametern und/oder in anderer Ausdehnung, beispielsweise für mehrere Gebäude, einen Stadtteil oder dergleichen, realisiert werden.

Es zeigen:
- Fig. 1: ein Blockdiagramm eines Datensammlers des erfindungsgemäßen Funksystems;
- Fig. 2: ein Ablaufdiagramm für die Steuerung des Datensammlers;
- Fig. 3: ein prinzipielles Zeitschema für das erfindungsgemäße Funksystem;
- Fig. 4: ein genaues Zeitschema für das erfindungsgemäße Funksystem;
- Fig. 5: ein Funktelegramm mit Verbrauchswerten;
- Fig. 6: ein Funktelegramm zur Synchronisation und zum Fluten von Betriebsparametern und
- Fig. 7: ein Funktelegramm für Servicefälle;

Als Endgeräte des Funksystems dienen Verbrauchserfassungsgeräte, bspw. für Heizkosten, Wärme, Strom, Gas oder dgl., mit einem Funksender, der Funktelegramme 1 mit Verbrauchsdaten zu pseudozufällig bestimmten Zeitpunkten aussendet. Im Mittel werden Funktelegramme 1 etwa alle 180 Sekunden gesendet. Ein Funktelegramm 1 enthält den Verbrauchswert V an einem Stichtag und zusätzlich die Verbrauchswerte V der letzten vier Monate. Nach Erreichen des Stichtags und bis etwa sechs Wochen danach erhöhen die Endgeräte ihre Aussendungsrate auf im Mittel alle 60 Sekunden, um eine schnelle und sichere Verbreitung der relevanten Verbrauchswerte zu erreichen. Der Inhalt der Funktelegramme 1 ändert sich dabei in einem typischen Dreierrhythmus: statt der Verbrauchswerte der letzten vier Monate werden nun jeweils zyklisch die Verbrauchswerte der vergangenen Monate 1 bis 4, 5 bis 8 und 9 bis 12 vor dem Stichtag gesendet. Der Stichtagsverbrauch als wichtigster Abrechnungswert ist in jedem Funktelegramm 1 enthalten.

Die von den Endgeräten ausgesendeten Funktelegramme 1 werden von batteriebetriebenen Datensammlern 2 empfangen, die jeweils bis zu 500 Endgeräte verwalten können. Ein Datensammler 2 weist dazu einen Funkempfänger zum Empfang der Funktelegramme 1, ein Rechenwerk mit Speicher 4, 7 zum Überprüfen und Speichern der Funktelegramme 1, 5 und/oder der zugehörigen Verbrauchswerte V und einen Funksender zur Aussendung von Funktelegrammen 5 an andere Datensammler 2 auf. In dem Rechenwerk ist als Verarbeitungs- und Steuereinheit eine Funktelegrammverwaltung 3 vorgesehen. Um auf den Datensammler 2 zugreifen zu können, bspw. um Verbrauchsdaten auszulesen oder Servicearbeiten vorzunehmen, ist ferner eine Auslese- und/oder Serviceschnittstelle 9 vorhanden.

Das gesamte Funksystem besteht insgesamt aus bis zu 500 Endgeräten, die ihre Verbrauchsdaten V an bis zu fünfzehn Datensammler 2 aussenden. Dies entspricht in etwa einem Ausstattungsfaktor von 33, der als das Verhältnis aus der Anzahl der Endgeräte zu der Anzahl der Datensammler 2 des Funksystems definiert ist. Eine derartige Konfiguration des Funksystems hat sich für die Verbrauchsdatenerfassung innerhalb eines Gebäudes gerade in Bezug auf die für das Weitersenden der Funktelegramme 6 zu übrigen Datensammlern 2 (Fluten) notwendige Zeit als besonders vorteilhaft erwiesen.

Der Frequenzbereich, in dem das Funksystem arbeitet, liegt bei 868 MHz, und der Duty-Cycle, d.h. das Verhältnis aus der Sender-An-Zeit zu der Sender-Aus-Zeit, liegt bei 0,1 %. In einem Duty-Cycle-Intervall von einer Stunde beträgt die Sender-An-Zeit, in der Funktelegramme 6 weitergesendet werden dürfen, demnach 3,6 Sekunden und die Sender-Aus-Zeit, in der der Datensammler 2 nichts senden darf, 3596,4 Sekunden. Die maximale ununterbrochene Sendezeit und die maximale ununterbrochene Pausenzeit betragen jeweils 720 Millisekunden. Die Länge eines typischen Funktelegramms liegt bei 4,1 Millisekunden, so dass die Sendezeitschlitze bzw. die Zeitschlitze für die Sendepausenverlängerung mit 5 Millisekunden bemessen werden können. Aus der maximalen ununterbrochenen Sendezeit und der Zeitschlitzdauer ergibt sich damit eine Anzahl von 144 Zeitschlitzen zur Übersendung der Funktelegramme 1, 6. Innerhalb eines Duty-Cycle-Intervalls können maximal 878 Funktelegramme 1, 6 gesendet werden. Die maximale Flutdauer eines Datensammlers 2 beträgt etwa 1540 Millisekunden, wobei eine Verarbeitungszeit von 100 Millisekunden für ein Funktelegramm 1, 6 angenommen wird. Für das ganze Funksystem ergibt sich damit ein maximale Flutdauer von 23,1 Sekunden. Für typische Systeme mit weniger Elementen beträgt die mittlere Flutdauer in der Regel etwa 4 Sekunden.

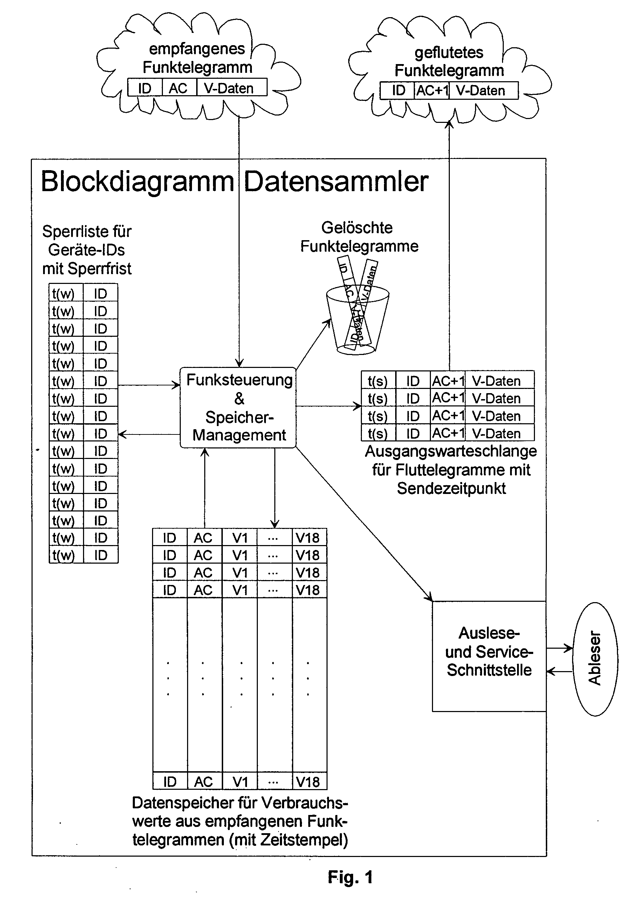

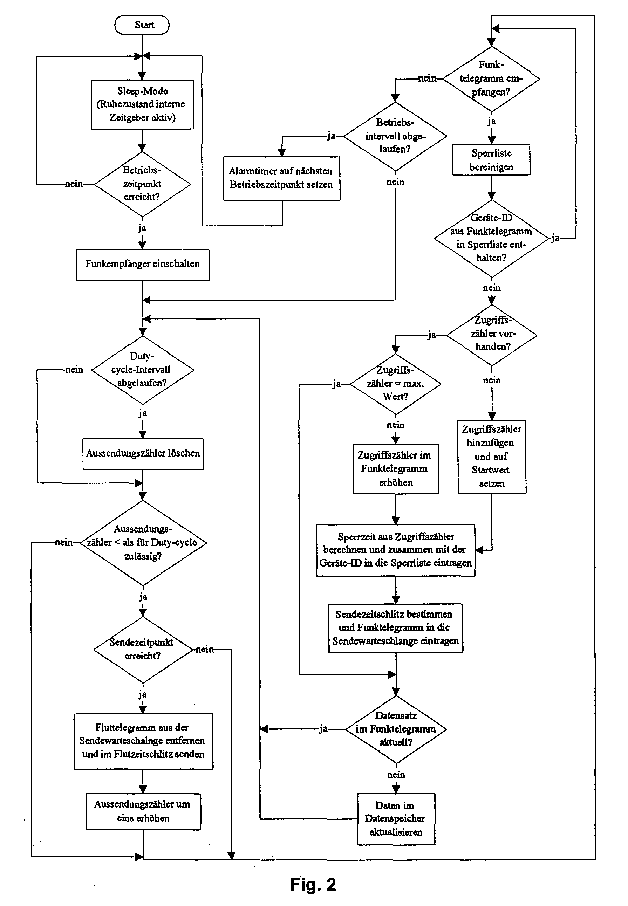

Die Funktionsweise des Funksystems wird nachfolgend anhand von Fig. 1 beschrieben. Ein von einem nicht dargestellten Endgerät (Verbrauchserfassungsgerät) ausgesendetes und von einem Datensammler 2 empfangenes Funktelegramm 1 enthält eine Geräte-Identifikation ID, einen Zugriffszähler AC und den erfassten Verbrauchswert V. Das empfangene Funktelegramm 1 wird in der Funktelegrammverwaltung 3, die die Aufgabe einer Funksteuerung und eines Speichermanagements übernimmt, analysiert. Dabei wird zunächst die Geräte-Identifikation ID in eine Sperrliste 4 eingetragen, wobei jeder Geräte-Identifikation eine Sperrfrist t(w) zugeordnet wird. Ferner wird das Funktelegramm 1 in einen als Ausgangswarteschlange 5 dienenden Bereich des Speichers des Datensammlers 2 eingestellt. Dabei wird der Zugriffszählers AC um 1 zu AC+1 inkrementiert und dem Funktelegramm 6 ein Sendezeitpunkt t(s) zugeordnet. Sobald der Sendezeitpunkt t(s) erreicht ist, wird das Funktelegramm 6 ausgesendet (geflutet) und von weiteren Datensammlern 2 empfangen. Zur Erfassung des Verbrauchs wird der Verbrauchswert V aus dem empfangenen Funktelegramm 1 extrahiert und zusammen mit der Geräte-Identifikation ID und dem Zugriffszähler AC in einen als Datenspeicher 7 dienenden Bereich des Speichers des Datensammlers 2 abgespeichert, wobei der Verbrauchswert V einem der Speicherplätze V1 bis V18 zugeordnet wird. Durch die matrixartige Struktur des Datenspeichers 7 kann mittels Zuordnung zu einem bestimmten Speicherplatz V1 bis V18 eine zeitliche Zuordnung des Verbrauchswerts V erfolgen. Alternativ könnte auch ein Zeitstempel mit abgespeichert werden. Beim Überprüfen des empfangenen Funktelegramms 1 stellt die Funktelegrammverwaltung 3 fest, ob bereits ein aktueller Verbrauchswert V für ein Endgerät mit der Geräte-Identifikation ID in dem Datenspeicher 7 abgespeichert ist. In diesem Fall findet eine erneute Speicherung des Verbrauchswerts V nicht statt. Außerdem wird ein Funktelegramm 1, dessen Zugriffszähler AC bereits einen maximalen Wert erreicht hat, ohne Weiterleiten in die Ausgangswarteschlange 4 durch eine Löschoperation 8 gelöscht. Zum Auslesen der Verbrauchswerte V und Konfigurieren des Datensammlers 2 ist ferner eine Auslese- und Serviceschnittstelle 9 vorhanden. Fig. 2 zeigt den Funktionsablauf in der Funktelegrammverwaltung 3 des Datensammlers 2 in einem detaillierteren Ablaufdiagramm.

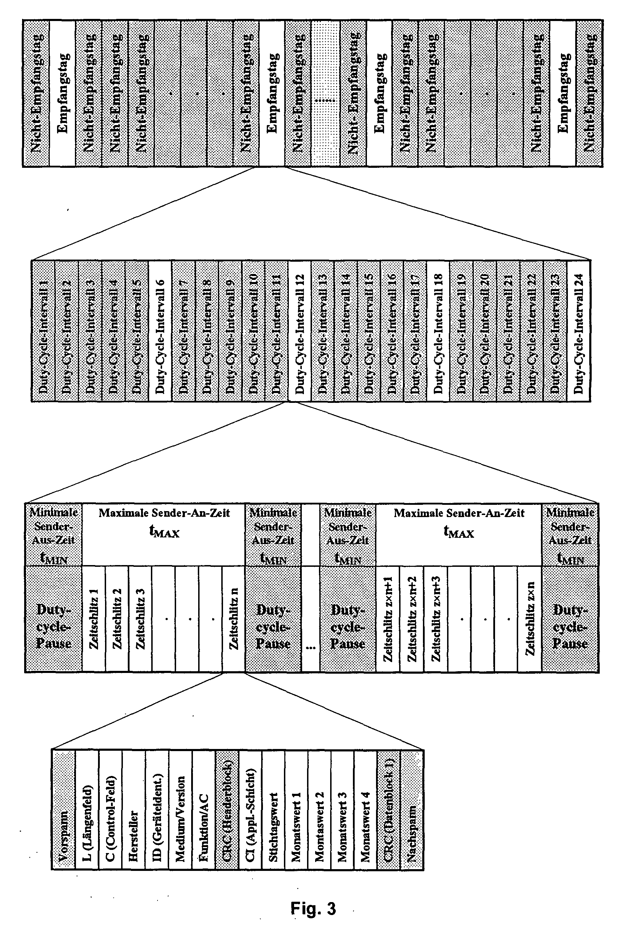

Wie Fig. 3 zu entnehmen, ist ein Datensammler 2 nicht an jedem Tag 10 betriebsbereit. An Nicht-Empfangstagen bleibt der Datensammler 2 zum Einsparen von Energie ausgeschaltet. Nur an bestimmten Empfangstagen werden Sender und Empfänger des Datensammlers 2 eingeschaltet. Ein solcher Empfangstag gliedert sich in 24 Duty-Cycle-Intervalle 11 von jeweils einer Stunde, in denen die Funkübertragung nach vorgegebenen Funkregeln 12 in Zeitschlitzen durchgeführt wird. Die Funkregeln 12 sehen Duty-Cycle-Pausen 13, vorgegebenen durch eine minimale Sender-Aus-Zeit, und Sendezeiten 14, vorgegeben durch eine maximale Sender-An-Zeit, vor. Die Sendezeiten 14 sind in Zeitschlitze 15 eingeteilt, in denen jeweils ein Funktelegramm 6 mit der entsprechenden Funktelegrammdefinition 16 versendet werden kann.

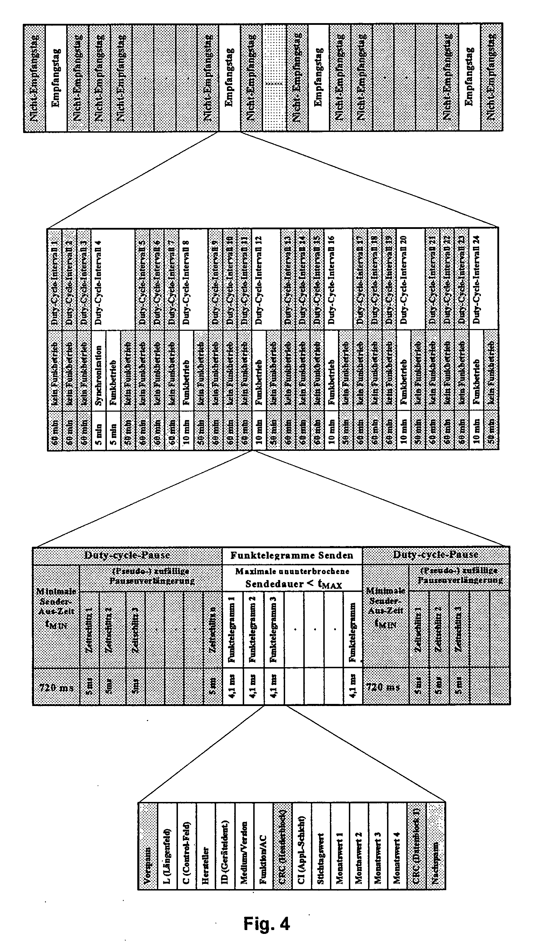

Das genaue Zeitschema für das Funksystemen kann Fig. 4 entnommenen werden. Da für die Genauigkeit der Datenerfassung seitens der sendenden Endgeräte ein Verbrauchswert V am Stichtag und monatliche Verbrauchswerte V ausreichen, muss ein Datensammler 2 nur einen Empfangstag im Monat und ggf. zusätzlich einen weiteren Empfangstag nach dem Stichtag haben. Mit Beginn des Empfangstags schalten alle Datensammler 2 gleichzeitig alle vier Stunden ihre Empfänger ein. Bei dem ersten Einschalten des Empfängers am Empfangstag findet zunächst eine Monatssynchronisation der Zeitgeber statt, wobei eine typische Zeitgebertoleranz im Bereich von 100 ppm liegt. Diese dauert etwa vier bis fünf Minuten. Während der Monatssynchronisation können die Datensammler 2 schon Funktelegramme 1 von Endgeräten empfangen. Mit dem Fluten der Funktelegramme 6 warten sie jedoch bis zum Ende der Synchronisationsphase, da nicht sichergestellt ist, dass alle Datensammler 2 schon empfangsbereit sind. Nach Abschluss der Synchronisation bleiben die Datensammler 2 für weitere fünf Minuten auf Empfang und fluten die Funktelegramme 6. Danach stellen sie den Funkbetrieb bis zum Erreichen des nächsten Vierstundenintervalls ein. Im nun folgenden Vierstundenintervallen können die aufgelaufenen Zeitgebertoleranzen seit der vorangegangenen Monatssynchronisation nur noch wenige Sekunden betragen. Es findet deshalb in den fünf folgenden Vierstundenintervallen lediglich eine Tagessynchronisation statt. Die Tagessynchronisation besteht aus wenigen sporadisch ausgesendeten Synchronisationstelegrammen, die in den normalen Flutprozess eingestreut werden. Damit haben auch Datensammler 2, die die Monatssynchronisation bspw. durch Fremdstörer verpasst haben, eine Möglichkeit zum Ausgleich Ihrer Zeittoleranzen.

Die Empfänger-An-Zeiten in den fünf folgenden Vierstundenintervallen sollen jeweils 10 Minuten betragen. In Summe ist ein Datensammler 2 am Empfangstag, und damit im Monat, etwa 60 Minuten in Betrieb. Die auf Grund des Duty-Cycles zur Verfügung stehende Sender-An-Zeit beträgt dabei etwa 22 Sekunden. Mit diesem Ergebnis ist es ohne weiteres möglich, batteriebetriebene Datensammler 2 zu realisieren, die mit Langzeitbatterien (z. B. Lithiumzellen) über mehrere Jahre betrieben werden können. Steht ausreichend Batteriekapazität zur Verfügung, können die Funkeigenschaften des Systems durch Einschalten des Funkbetriebs in kürzeren Abständen, bspw Ein- oder Zweistundenintervallen, noch verbessert werden.

Dauerversorgte Datensammler 2 (bspw. durch Fremdversorgung aus der Steckdose) unterliegen keiner Beschränkung des Versorgungsstroms. Sie können deshalb permanent im Empfangs- und Sendebetrieb sein. Der Sendebetrieb ist allein durch den Duty-cycle des gewählten Frequenzbandes beschränkt. Derartige Datensammler 2 können neben ihrer eigentlichen Funktion zur Akquisition und Administration von Endgerätedaten auch als reine Repeater verwendet werden. Dies lässt sich aufgrund der Verlängerung der Endgerätefunkstrecken durch die Datensammler 2 vorteilhaft für Walk-by- oder Drive-by-Ableseverfahren nutzen. Diese Verfahren des Ablesens im Vorübergehen bzw. Vorbeifahren können dort sinnvoll eingesetzt werden, wo ein Betreten eines abzulesenden Gebäudes mit Schwierigkeiten verbunden ist, oder wo das Kosten-/Nutzenverhältnis für die Ablesung dies gebietet. In solchen Fällen ist es denkbar, ganz auf die Speicherung der Daten im Datensammler 2 zu verzichten, um die Systemkosten weiter zu senken.

Mögliche Funktelegrammdefinitionen, die für den Funkbetrieb in dem Funksystem verwendet werden, lehnen sich an die internationale Norm IEC 870-5-1 Formatklasse FT 3 und den europäischen Normvorschlag der CEN TC 294 an. In dieser Norm bzw. diesem Normvorschlag werden geeignete Telegrammformate und Betriebsmodi für die zweckgebundene Daten- bzw. Funkübertragung beschrieben. Der allgemeine Stand der Technik bevorzugt bei der drahtlosen Übertragung von Informationen eine gleichspannungsfreie Leitungskodierung, bspw. durch Überlagerung des Nutzdatenstroms mit einem wohldefinierten pseudozufälligen Bitstrom. Dies garantiert keine Gleichspannungsfreiheit, sondern nähert sich ihr im statistischen Mittel nur an. Vorteil des sog. Data-Scrambling ist, dass es keinen Overhead erzeugt. Ein Verfahren, das Gleichspannungsfreiheit sicherstellt, ist die 3-aus-6-Kodierung, wie sie in der CEN TC 294 vorgeschlagen ist. Hier werden jeweils 4 Datenbits in 3 Null- und 3 Einsbits überführt. Bei gleicher Datenrate werden gegenüber der NRZ-Codierung 50% Overhead erzeugt. Der aus der Informationstechnik bekannte Manchester-Code wird in der CEN TC 294 ebenfalls als Leitungscodierung für die Funkübertragung vorgeschlagen. Der Manchester-Code erzeugt aus jedem NRZ-Bit mindestens einen Flankenwechsel und zwei Chips. Der Overhead liegt hier bei 100% und ist damit am ungünstigsten. Der Vorteil der Manchester-Codierung liegt in der einfachen Realisierung mit wenigen Logikgattern.

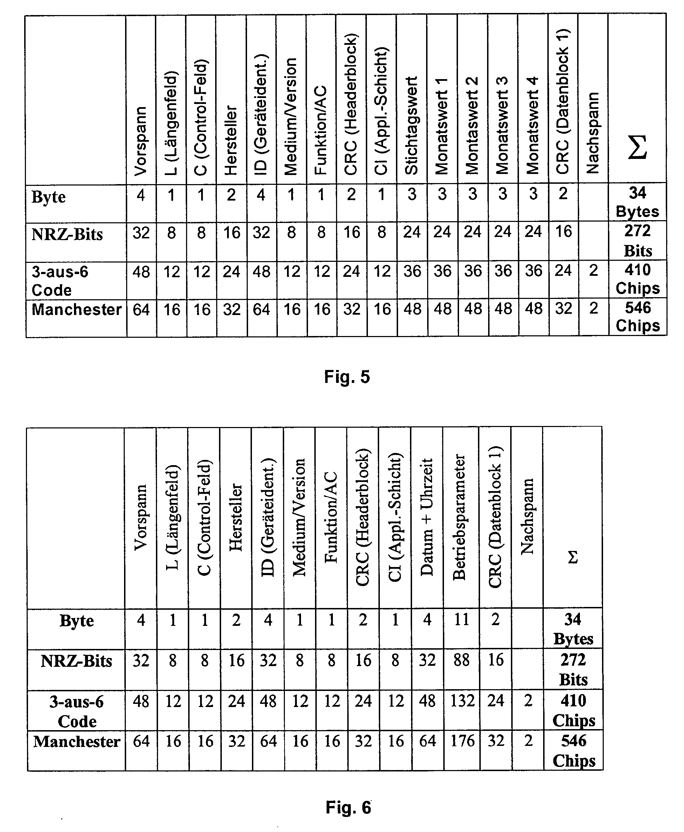

Um ein erfindungsgemäßes Flutnetzwerk sinnvoll effizient betreiben zu können, werden kurze Funktelegramme 1, 6 benötigt. Zum einen ist die Eigenkollisionsrate niedrig zu halten. Zum anderen lässt eine Duty-cycle-Beschränkung nur eine begrenzte Sendezeit zu. Diese sollte möglichst effizient genutzt werden. Kurze Funktelegramme 1, 6 erhält man durch Beschränkung auf die wirklich notwendigen Daten und eine hohe Übertragungsrate. Das nach Fig. 5 vorgeschlagene Funktelegramm 1, 6 mit den Verbrauchswerten ist bei 100 Kilochips pro Sekunde [kcps] Übertragungsrate lediglich 4,1 Millisekunden lang und kann fünf abrechnungsrelevante Verbrauchswerte aufnehmen.

Das in Fig. 6 gezeigte Synchronisations-Fluttelegramm kann zum Fluten von Datum und Uhrzeit zum Zwecke der Synchronisation der Empfängereinschaltzeiten verwendet werden. Dem Fluttelegramm können noch 11 x 8 Bit Nutzdaten, bspw. Betriebsparameter hinzugefügt werden, die an alle Datensammler des Systems verteilt werden sollen. Diese Nutzdaten können in einen beliebigen Datensammler 2 des Funksystems eingespeist werden.

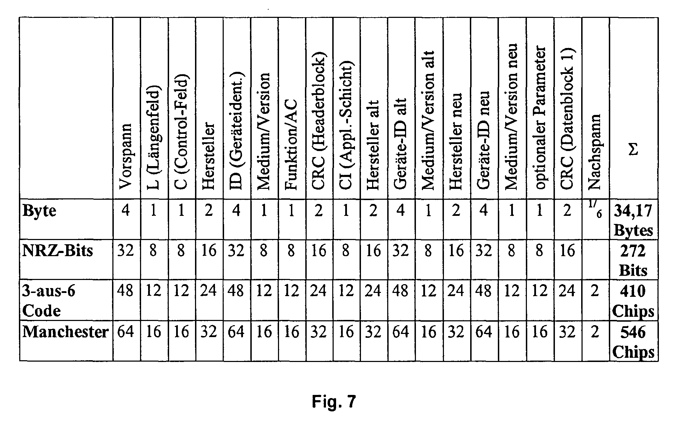

Das in Fig. 7 dargestellte Fluttelegramm kann für Servicefälle wie "Gerät hinzufügen/tauschen/löschen" genutzt werden.

Für den Fall eines Gerätetausches enthält der Datenteil des Fluttelegramms die Kennung des Geräts, das ersetzt wurde (Hersteller alt, ID alt, Medium/Version alt), gefolgt von der Kennung des neuen Geräts (Hersteller neu, ID neu und Medium/Version neu). Empfangen andere Datensammler 2 eines Systems solch ein Telegramm, dann ersetzen sie die Kennung des alten Geräts durch die Kennung des neuen Geräts im Speicher und betrachten es damit als zum System gehörig. Der Telegrammkopf enthält die ID des Datensammlers von dem der Servicebefehl ausging und im Feld "Funktion/AC" einen Funktionscode für diesen Servicefall.

Der Fall "Gerät löschen" lässt sich als Spezialfall des Gerätetausches behandeln. Eine Möglichkeit wäre beispielsweise, die "Kennung alt" des zu löschenden Geräts der "Kennung neu" gleichzusetzen. Eine andere Möglichkeit besteht darin, die "Kennung neu" auf einen ungültigen/unmöglichen Wert zu setzen, bspw. möglich bei Verwendung einer BCD-Kodierung. Der Telegrammkopf enthält die ID des Datensammlers, von dem der Servicebefehl ausging, und im Feld "Funktion/AC" einen Funktionscode für diesen Servicefall.

Das Verfahren für den Servicefall "Gerät hinzufügen" kann analog behandelt werden. Dazu kann die "Kennung neu" des hinzugefügten Geräts der "Kennung alt" gleich oder die "Kennung alt" auf einen ungültigen/unmöglichen Wert gesetzt werden. Der Telegrammkopf enthält die ID des Datensammlers 2, von dem der Servicebefehl ausging, und im Feld "Funktion/AC" einen Funktionscode für diesen Servicefall.

Ein elementarer Vorteil des beschriebenen Funksystems liegt in der Einfachheit seiner Konzeption, die sich bei der technischen Realisierung eines Datensammlers 2 und dem anschließenden Funktionstest positiv durch Zeit- und Geldersparnis niederschlägt. Dieser Vorteil ergibt sich unter anderem aus der Tatsache, dass kein höherliegendes Netzwerkprotokoll oder spezielle Send-/Confirmoder Request-/Respond-Prozeduren zur Vernetzung der Datensammler 2 implementiert wurden. Die Datensammler 2 verhalten sich senderseitig nahezu wie vervielfältigte Endgeräte. Deshalb können empfangsseitig die Funktelegramme 1, 6 von Endgeräten und Datensammlern gleichartig verarbeitet werden.

Ein weiterer vorteilhafter Aspekt der Erfindung ist die starke Vereinfachung der typischen Servicefälle. Speziell lässt sich hier die Ablesung hervorheben. In Systemen ohne vernetzte Datensammler ist jeder Datensammler einzeln auszulesen. Die so gewonnen Rohdaten enthalten zahlreiche Redundanzen. Es besteht daher die Notwendigkeit, die Daten vor einer Weiterverarbeitung zu konsolidieren und zu bereinigen. In dem erfindungsgemäßen System kann durch das Flutnetzwerk davon ausgegangen werden, dass alle Datensammler 2 die Verbrauchsdaten V aller Endgeräte eines Systems empfangen und verwalten.

Daraus folgt, dass es i. d. R. genügt, einen einzigen Datensammler 2 auszulesen, um alle abrechnungsrelevanten Verbrauchsdaten V zu erhalten. Redundanzen können hierbei nicht auftreten; die aus einem Datensammler 2 gewonnen Daten sind daher direkt verarbeitbar.

Andere Servicefälle, wie z. B. das Verteilen von Betriebsparametern und Konfigurationsdaten an alle Datensammler 2 eines Systems, können durch das Fluten sehr einfach bewerkstelligt werden. Die Daten können an einem beliebigen Datensammler 2 eingespeist und durch das Flutnetzwerk automatisch verteilt werden.

Ein weiterer Vorteil des erfindungsgemäßen Funksystems liegt darin, dass die Duty-cycle-Anforderungen der neuen ISM-Frequenzbänder durch die senderseitige Aussendungsbeschränkung mittels Aussendungszähler im Duty-cycle-Intervall einfach eingehalten werden können.

Mit dem erfindungsgemäßen Funksystem wurde ein Flutnetzwerk geschaffen, das keine feste Topologie hat. Diese ergibt sich im Betrieb zufällig über die Funkreichweiten. Eine umständliche Netzwerkplanung oder -konfiguration kann daher entfallen. Durch die Gleichartigkeit aller Datensammler 2 und den Verzicht auf ausgeprägte Hierarchiestufen im Funksystem wird eine hohe Robustheit der Funkkommunikation erzielt. Ausfälle einzelner Datensammler 2 führen nicht automatisch zu einem Zusammenbruch des Funksystems, da keine festen Kommunikationswege existieren. Dadurch wird eine besonders nutzer- und wartungsfreundliche Plug&Play-Lösung geschaffen.

### Bezugszeichenliste:

- 1: empfangenes Funktelegramm
- 2: Datensammler
- 3: Funktelegrammverwaltung
- 4: Speicher, Ausgangswarteschlange
- 5: Sperrliste
- 6: geflutetes Funktelegramm
- 7: Speicher, Datenspeicher
- 8: Löschoperation
- 9: Auslese- und Serviceschnittstelle
- 10: Tage
- 11: Duty-Cycle-Intervalle
- 12: Funkregeln
- 13: Duty-Cycle-Pausen
- 14: Sendezeiten
- 15: Zeitschlitze
- 16: Funktelegrammdefinition

- ID: Geräte-Identifikation
- AC: Zugriffszähler
- V: Verbrauchswert
- t(w): Sperrfrist
- t(s): Sendezeitpunkt

## Patentansprüche

1. Funksystem zur Verbrauchsdatenerfassung aus einem Funknetzwerk mit Endgeräten und Datensammlern (2), wobei ein Endgerät jeweils eine Einrichtung zur Erfassung von Verbrauchswerten (V) und einen Funksender zur Aussendung von Funktelegrammen (1) mit den dem Endgerät zuordenbaren Verbrauchswerten (V) aufweist und ein Datensammler (2) jeweils einen Funkempfänger zum Empfang der Funktelegramme (1), ein Rechenwerk mit Speicher (4, 7) zum Überprüfen und Speichern der Funktelegramme (1, 6) und/oder der zugehörigen Verbrauchswerte (V) und einen Funksender zum Aussenden von Funktelegrammen (6) aufweist, **dadurch gekennzeichnet, dass** die Funksender der Endgeräte und der Datensammler (2) in dem gleichen Frequenzbereich arbeiten und dass die Datensammler (2) die empfangenen Funktelegramme (1) wieder aussenden, wobei das Aussenden der Funktelegramme (6) mittels einer Funktelegrammverwaltung (3) im Datensammler (2) kontrolliert wird.

2. Funksystem nach Anspruch 1, **dadurch gekennzeichnet, dass** die Funktelegrammverwaltung (3) eine Sperrliste (5) der Endgeräte führt, von denen durch den Datensammler (2) bereits ein Funktelegramm (1, 6) empfangen und wieder ausgesendet wurde, und dass ein Funktelegramm (6) von dem Datensammler (2) nur wieder ausgesendet wird, wenn das zugeordnete Endgerät nicht in der Sperrliste (5) geführt wird.

3. Funksystem nach Anspruch 2, **dadurch gekennzeichnet, dass** bei Empfang eines Funktelegramms (1) durch die Funktelegrammverwaltung (3) überprüft wird, ob das dem Funktelegramm (1) zugeordnete Endgerät bereits in der Sperrliste (5) geführt wird, es andernfalls zusammen mit einer Sperrfrist (t(w)) in die Sperrliste (5) eingetragen und nach Ablauf der Sperrfrist (t(w)) wieder aus der Sperrliste (5) gelöscht wird.

4. Funksystem nach Anspruch 2 oder 3, **dadurch gekennzeichnet, dass** die Sperrliste (5) chronologisch nach Empfangszeitpunkten, insbesondere als First-In-First-Out-Speicher, organisiert ist.

5. Funksystem nach einem der vorhergehenden Ansprüche, **dadurch gekennzeichnet, dass** im Funktelegramm (1, 6) ein Zugriffszähler (AC) geführt wird, der bei jedem Aussenden des Funktelegramms (6) weitergezählt wird, dass die Funktelegrammverwaltung (3) den Zugriffszähler (AC) bei Empfang des Funktelegramms (1) überprüft und das Funktelegramm (6) nur wieder aussendet, wenn der Zugriffszähler (AC) einen vorgegebenen Schwellenwert nicht erreicht hat.

6. Funksystem nach einem der Ansprüche 3 oder 4 und Anspruch 5, **dadurch gekennzeichnet, dass** die Dauer der Sperrfrist (t(w)) in Abhängigkeit von dem Wert des Zugriffszähler (AC) bestimmt wird.

7. Funksystem nach einem der vorhergehenden Ansprüche, **dadurch gekennzeichnet, dass** einem auszusendenden Funktelegramm (6) ein vorzugsweise pseudozufällig bestimmter Sendezeitpunkt (t(s)) zugeordnet und das Funktelegramm (6) bis zum Erreichen des Sendezeitpunkts (t(s)) in einem temporären Speicher (4) zwischengespeichert wird.

8. Funksystem nach einem der vorhergehenden Ansprüche, **dadurch gekennzeichnet, dass** auszusendende Funktelegramme (6) während einer Sendepause mit vorzugsweise pseudozufälliger Länge in einem temporären Speicher (4) zwischengespeichert und nach Ablauf der Sendepause vorzugsweise als kontinuierliche Folge von Funktelegrammen (6) gesendet werden.

9. Funksystem nach einem der vorhergehenden Ansprüche, **dadurch gekennzeichnet, dass** das Aussenden von Funktelegrammen (6) nur innerhalb vorgesehener Zeitintervalle eines Duty-Cycle-Intervalls des Funksystems vorgenommen wird.

10. Funksystem nach Anspruch 9, **dadurch gekennzeichnet, dass** die Zeitintervalle mittels eines Aussendungszählers ermittelt werden.

11. Funksystem nach einem der vorhergehenden Ansprüche, **dadurch gekennzeichnet, dass** nach jedem Senden eines Funktelegramms (6) oder einer Funktelegrammfolge eine Sendepause eingelegt wird, die aus einem Mindest-Zeitabschnitt und ggf. einem variablen, vorzugsweise pseudozufällig bestimmten Zeitabschnitt aufgebaut ist.

12. Funksystem nach einem der vorhergehenden Ansprüche, **dadurch gekennzeichnet, dass** ein in einem empfangenen Funktelegramm (1) enthaltener Verbrauchswert (V) im Datenspeicher (7) des Datensammlers (2) gespeichert wird, wenn noch kein aktueller Datensatz vorhanden ist, wobei die Aktualität des Verbrauchswerts (V) bzw. Datensatzes mittels eines Zeitstempels oder einer definierten, insbesondere matrixartigen Speicherstruktur ermittelbar ist.

13. Funksystem nach einem der vorhergehenden Ansprüche, **dadurch gekennzeichnet, dass** sich ein insbesondere batteriebetriebener Datensammler (2) nur zu bestimmten Betriebsintervallen einschaltet, wobei die Einschaltzeiten für die Empfänger und/oder Sender mit den übrigen Datensammlern (2) insbesondere mittels Synchronisations-Fluttelegrammen synchronisierbar sind.

14. Funksystem nach einem der vorhergehenden Ansprüche, **dadurch gekennzeichnet, dass** die Systemzugehörigkeit eines Endgeräts und/oder eines Datensammlers (2) insbesondere mittels einer Geräte-ldentifikationsliste und/oder eines übereinstimmenden Systemcodes feststellbar ist.

15. Funksystem nach einem der vorhergehenden Ansprüche, **dadurch gekennzeichnet, dass** die Betriebsparameter eines Datensammlers (2) mittels Service-Funktelegrammen und/oder durch Parametrisierung bei der Geräteherstellung variabel einstellbar sind.

16. Funksystem nach Anspruch 15, **dadurch gekennzeichnet, dass** ein Datensammler (2) mittels Service-Funktelegrammen seine Betriebsparameter durch Bestimmung seiner Funkumgebung automatisch anpasst.
